Europäisches Patentamt

European Patent Office

Office européen des brevets

(19)

(11) Veröffentlichungsnummer: **0 372 259**
**A2**

(12) **EUROPÄISCHE PATENTANMELDUNG**

(21) Anmeldenummer: **89120953.8**

(22) Anmeldetag: **11.11.89**

(51) Int. Cl.⁵: **G06F 3/033, G09B 21/00**

(30) Priorität: **07.12.88 DE 3841169**
**07.06.89 DE 3918541**

(43) Veröffentlichungstag der Anmeldung:
**13.06.90 Patentblatt 90/24**

(84) Benannte Vertragsstaaten:
**AT CH DE FR GB IT LI NL SE**

(71) Anmelder: **Brümmer, Hans, Prof. Dr.-Ing.**
**Steinberg 12**
**D-3257 Springe 1(DE)**

(72) Erfinder: **Brümmer, Hans, Prof. Dr.-Ing.**
**Steinberg 12**
**D-3257 Springe 1(DE)**

(74) Vertreter: **Thömen, Uwe, Dipl.-Ing.**
**Patentanwalt U. Thömen Zeppelinstrasse 5**
**D-3000 Hannover 1(DE)**

(54) **Vorrichtung zur Kommunikation von Blinden und Sehbehinderten mit datenverarbeitenden Geräten.**

(57) Vorrichtung zur Kommunikation von Blinden oder Sehbehinderten mit datenverarbeitenden Geräten zur Auswahl eines einem Bildschirmzeichen entsprechenden Koordinatenpunktes auf einem Bildschirm, wobei die Auswahl des Koordinatenpunktes in zwei zueinander senkrechten x- und y-Richtungen mit Hilfe jeweils einer Auswahleinrichtung erfolgt. Diese Auswahleinrichtungen sind jeweils durch eine Vielzahl von ortsfesten Schaltelementen gebildet, wobei die Anzahl der Schaltelemente für die x-Richtung der Anzahl der Bildschirmspalten und die Anzahl der Schaltelemente für die y-Richtung der Anzahl der Bildschirmzeilen entspricht.

Fig.2

EP 0 372 259 A2

## Vorrichtung zur Kommunikation von Blinden oder Sehbehinderten mit datenverarbeitenden Geräten

Die Erfindung betrifft eine Vorrichtung zur Kommunikation von Blinden oder Sehbehinderten mit datenverarbeitenden Geräten gemäß dem Oberbegriff des Patentanspruchs 1.

Eine solche Vorrichtung, die durch die EP 0 098 461 B1 bekannt ist, soll blinden oder stark sehbehinderten Personen die Orientierung auf einem Bildschirm sowie die Auswahl eines bestimmten Bildschirmzeichens oder auch einer Gruppe von Zeichen ermöglichen, die dann über eine tastbare Blindenschrift-Ausgabe, über einen Großbildschirm (für nicht blinde aber sehbehinderte Personen) oder über eine Sprachausgabe ausgegeben werden.

Bei der bekannten Vorrichtung erfolgt die Auswahl des einem Bildschirmzeichen entsprechenden Koordinatenpunktes in zwei zueinander senkrechten x- und y-Richtungen jeweils mittels einer zugeordneten Auswahleinrichtung. Diese Auswahleinrichtungen sind durch unabhängig voneinander bewegliche, endlagenstabile Schieber gebildet, denen jeweils eine Positionserfassungseinrichtung zugeordnet ist, um die betreffende Position bzw. Lage des Schiebers festzustellen.

Dabei ist der Verschiebeweg jedes Schiebers durch eine Hell-Dunkel-Skala in ein diskretes Raster aufgeteilt, und die Erfassung der Position der Schieber erfolgt mit Hilfe einer optischen Abtastvorrichtung. Zur Markierung bzw. zum Erkennen des Überganges von einem Rasterfeld des Rasters auf das nächste Rasterfeld während des Verschiebens des Schiebers sind der Positionserfassungseinrichtung Tongeneratoren nachgeschaltet, die dem Benutzer den Übergang von einem zu einem anderen Rasterfeld akustisch erkennbar machen.

Grundsätzlich ist auf diese Weise eine Kommunikation von Blinden oder Sehbehinderten mit datenverabeitenden Geräten zur Auswahl eines einem Bildschirmzeichen entsprechenden Koordinatenpunktes möglich, allerdings zeigen sich in der Praxis bei der Handhabung dieser bekannten Vorrichtung einige Unzulänglichkeiten.

Für die Realisierung der bekannten Vorrichtung sind eine Vielzahl mechanisch optischer Bauteile mit sehr hoher Präzision erforderlich, wobei diese Teile bei der Bedienung einem gewissen Verschleiß unterworfen sind, abgesehen davon, daß die Anschaffungskosten für eine solche Vorrichtung wegen der erwähnten hohen Präzision der mechanischen optischen Bauteile hoch anzusetzen sind.

Wegen der diskreten Rasteraufteilung mit den einzelnen Rasterfeldern einer Hell-Dunkel-Skala ist ferner der schon erwähnte Tongenerator zur Erzeugung einer Rückmeldung erforderlich, um zu verhindern, daß bei der Bewegung der Schieber eine Zwischenstellung zwischen zwei benachbarten Rasterfeldern eingenommen wird, sondern daß tatsächlich ein diskreter Rasterpunkt erreicht wird. Dieser Aspekt ist deshalb von Bedeutung, weil die Schieber kontinuierlich von dem Benutzer bewegt werden.

Im übrigen gestaltet sich auch der Aufbau des die Hell-Dunkel-Skala bildenden Lineals sehr aufwendig und kostenintensiv. Schließlich wird von dem Benutzer wegen der kontinuierlichen Verschiebung und der gleichwohl erforderlichen Endstellung des Verschiebeweges auf einem diskreten Rasterfeld eine erhöhte Aufmerksamkeit bei der Handhabung verlangt.

Der Erfindung liegt die Aufgabe zugrunde, die Vorrichtung gemäß dem Oberbegriff des Patentanspruchs 1 dahingehend zu verbessern, daß eine kostengünstigere Realisierung und eine einfachere Bedienung für den Benutzer ermöglicht wird.

Diese Ziel erreicht die Erfindung bei der im Oberbegriff des Anspruchs 1 vorausgesetzten Vorrichtung durch die Merkmale des kennzeichnenden Teils des Patentanspruchs 1.

Bei der Erfindung wird die Auswahleinrichtung jeweils durch eine Vielzahl von ortsfesten Schaltelementen gebildet, wobei die Anzahl der Schaltelemente für die Spalten und für die Zeilen jeweils der Anzahl der Spalten bzw. Zeilen selbst entspricht.

Bei dieser neuartigen Ausgestaltung der Vorrichtung kann auf die zuvor erwähnte bekannte Positionserfassungseinrichtung mit den nachgeschalteten Tongeneratoren vollständig verzichtet werden, die durch die ortsfesten Schaltelemente ersetzt werden. Die Position dieser Schaltelemente entspricht den einzelnen Zeilen und Spalten des Bildschirmes. Bei Berührung durch die Finger des Benutzers erzeugen diese Schaltelemente ein den ausgewählten Zeilen und Spalten entsprechendes elektrisches Signal. Eine besondere Einrichtung, um den Übergang von einem Raster zum anderen Raster bzw. von einer Bildschirmposition zur anderen Bidlschirmposition durch Tongeneratoren ist dabei nicht erforderlich. Vielmehr wird auf bewegliche Teile in Form der bekannten Schieber vollständig verzichtet, so daß die neue Vorrichtung auch weniger anfällig ist.

Der grundlegende Gedanke der Erfindung und zugleich auch ihr Vorteil besteht also darin, die bekannten mechanisch bewegten Schieber mit der zugeordneten Positionserfassungseinrichtung durch ortsfeste Schaltelemente zu ersetzen, aus deren Anordnung sich bei Berührung durch die tastenden Finger des Benutzers direkt die jeweils ausgewählte Position auf dem Bildschirm ergibt.

2

In zweckmäßiger Ausgestaltung der Erfindung lassen sich die Schaltelemente durch metallisierte Flächen in Form einer kostengünstig herzustellenden gedruckten Schaltung realisieren.

Zum leichteren Auffinden bestimmter Schaltelemente können diese in einer weiteren zweckmäßigen Ausgestaltung der Erfindung mit tastbaren Markierungen versehen sein, z.B. dadurch, daß jedes 5. Schaltelement eine solche zusätzliche Markierung besitzt. Dadurch wird die Orientierung für den Benutzer in vorteilhafter Weise gefördert.

Da durch die Berührung der Schaltelemente mit dem Finger die einzelnen Schaltelemente und auch der Übergang von einem Schaltelement zu einem anderen Schaltelement direkt fühlbar ist, kann in vorteilhafter Weise der bei der bekannten Vorrichtung erforderliche Tongenerator entfallen.

Weitere zweckmäßige Ausgestaltungen der Erfindung ergeben sich aus den Unteransprüchen, der nachfolgenden Beschreibung und der Zeichnung.

Nachfolgend wird die Erfindung anhand der in der Zeich nung dargestellten Ausführungsbeispiele näher erläutert. Es zeigen:

Fig. 1 eine schematische Ansicht zweier benachbart zu einer Eingabetastatur angeordneter Auswahleinrichtungen,

Fig. 2 eine Ansicht eines Bildschirmes zur Verdeutlichung der Auswahl eines bestimmten Koordinatenpunktes,

Fig. 3 ein elektrisches Prinzipschaltbild zur Funktionsweise der Schaltelemente einer Auswahleinrichtung,

Fig. 4 ein Paar durch einen Finger überbrückte Schaltelemente,

Fig. 5 ein elektrisches Ersatzschaltbild des die Schaltelemente überbrückenden Fingers, und

Fig. 6 ein elektrisches Prinzipschaltbild einer anderen Ausführungsform zur Wirkungsweise der Schaltelemente.

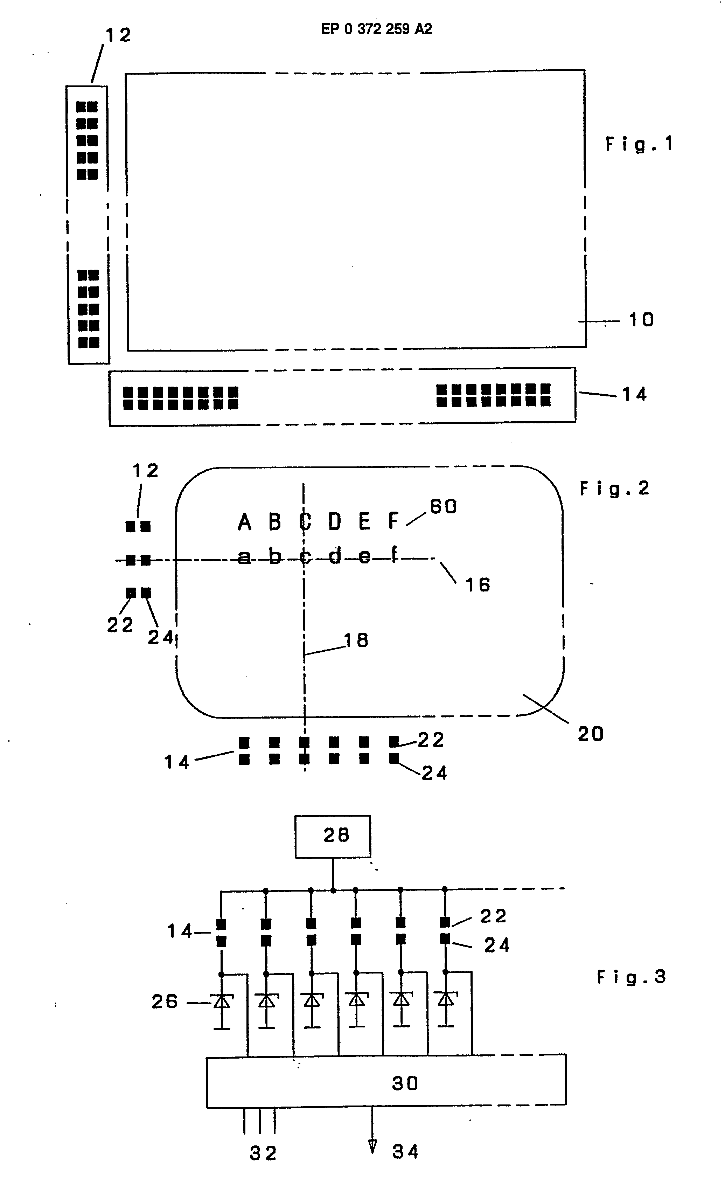

Die in Fig. 1 dargestellte Vorrichtung umfaßt eine schematisch angedeutete Eingabetastatur 10, die beispielsweise einem Personal-Computer zugeordnet ist. Seitlich neben der Eingabetastatur 10 befindet sich eine senkrecht angeordnete Auswahleinrichtung 12, und eine weitere Auswahleinrichtung 14 ist waagerecht unterhalb der Eingabetastatur 10 angeordnet.

Entsprechend einem üblichen Koordinatenkreuz ist die Auswahleinrichtung 12 der y-Richtung und die Auswahleinrichtung 14 der x-Richtung zugeordnet.

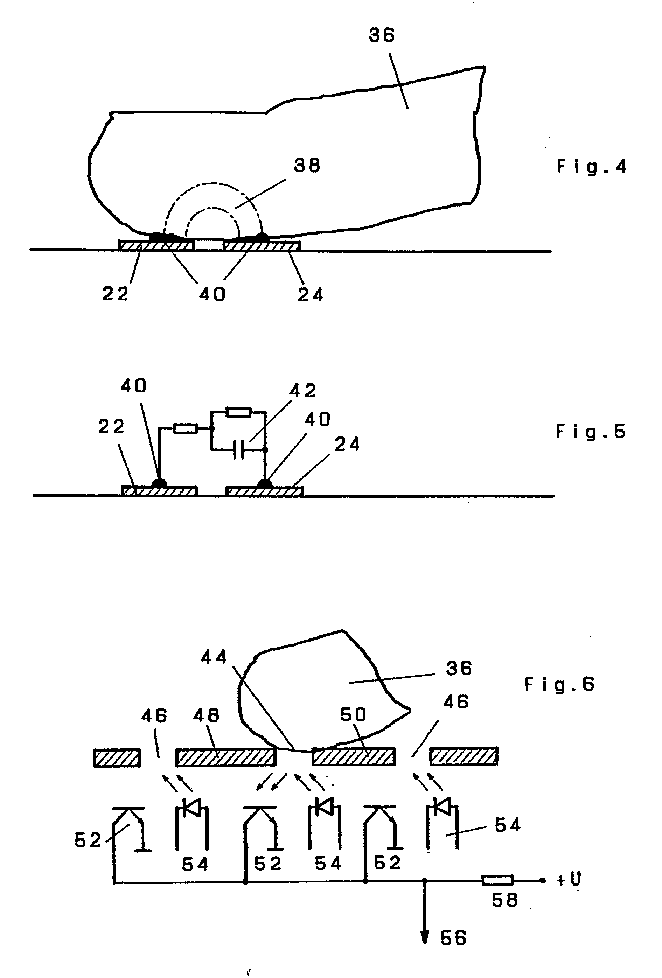

Jede der Auswahleinrichtungen 12, 14 enthält als Schaltelemente diskrete Elektrodenpaare in Form von Elektroden 22 und 24, und wie weiter unten noch anhand von Fig. 4 erläutert wird, lassen sich gegenüberliegende Elektroden 22, 24 mit dem Finger einer Bedienungsperson überbrücken, um einen Schaltvorgang auszulösen.

Fig. 2 verdeutlicht die durch strichpunktierte Linien markierte Auswahl von Bildschirmzeichen 60 auf einem Bildschirm 20, wobei hier das Zeichen "c" betroffen ist. Dieses Zeichen "c" ist definiert durch die Bildschirmzeile 16 und die Bildschirmspalte 18. Die Auswahl erfolgt dadurch, daß die der Bildschirmzeile 16 bzw. der Bildschirmspalte 18 zugeordneten Elektroden 22, 24 durch Überbrückung mit einem Finger geschaltet worden sind.

Bei der Erfindung ist jeder möglichen Bildschirmzeile 16 sowie jeder möglichen Bildschirmspalte 18 jeweils ein Elektrodenpaar 22, 24 zugeordnet, wobei die Elektroden 22 und 24 ortsfest angeordnet sind.

Es ist also eine direkte Zuordnung der Auswahleinrichtungen 12 und 14 zur Darstellung auf dem Bildschirm 20 vorgesehen, wobei durch die erwähnte Berührung der entsprechenden Elektrodenpaare 22, 24 die zugehörige Bildschirmzeile 16 und die zugehörige Bildschirmspalte 18 ausgewählt werden, in deren Schnittpunkt sich in dem dargestellten Beispiel das Zeichen "c" befindet. Dieses Zeichen kann dann über an sich bekannte Schaltungen auf einer nicht dargestellten Blindenschriftzeile, auf einem Großbildschirm oder auch über eine Sprachausgabe ausgegeben werden.

In Fig. 3 - 5 ist das Prinzip der Betätigung und Wirkungsweise einer für die x-Richtung zuständige Auswahleinrichtung 14 mit den Elektrodenpaaren 22, 24 dargestellt. Die oberen Elektroden 22 sind in Fig. 3 mit einer Schaltung 28 verbunden, wobei die oberen Elektroden 22 von dieser Schaltung 28 mit einer rechteckförmigen Wechselspannung versorgt werden.

Beim Auflegen eines Fingers 36 auf ein Elektrodenpaar 22, 24 gemäß Fig. 4 fließt dann ein Strom 38 über das Gewebe des Fingers 36 zwischen den Elektroden 22 und 24. Dieser Strom ruft in der der unteren Elektrode in Fig. 3 zugeordneten Z-Diode 26 einen der Zener-Spannung entsprechenden Spannungsabfall hervor.

Mittels einer elektronischen Abtastvorrichtung 30, die von Adressiereingängen 32 gesteuert ist, werden diese Signale an den einzelnen Z-Dioden 26 sehr schnell nacheinander nach Art eines Multiplexers abgefragt.

Wenn dabei ein durch einen aufgelegten Finger 36 hervorgerufener Spannungsabfall festgestellt wird, wird dieses am Signalausgang 34 der elektronischen Abtastvorrichtung 30 festgestellt und gemeldet. Aus der an den Adressiereingängen 32 vorhandenen Signalkombination wird somit die zugehörige Bildschirmzeile 16 ermittelt.

Fig. 3 betrifft als Beispiel die in waagerechter x-Richtung verlaufende Auswahlrichtung 14 zur Auswahl einer Bildschirmzeile. Für die Festlegung einer Bildschirmspalte ist eine entsprechende Schaltungsanordnung mit der Schaltung 28, Zener-Dioden 26 und der elektronischen Abtastvorrichtung 30 vorgesehen.

Die schon erwähnte Verwendung einer rechteckförmigen Wechselspannung, die von der Schaltung 28 erzeugt wird, ist von besonderem Vorteil, wenn man das in Fig. 5 dargestellte Ersatzschaltbild des Gewebes eines Fingers 36 berücksichtigt. Durch die Kapazität 42 werden die schnellen Spannungsänderungen der rechteckförmigen Wechselspannungen gut übertragen, so daß es möglich ist, eine Wechselspannung mit nur geringer Amplitude zu verwenden.

Zur Erhöhung des Bedienungskomforts der Vorrichtung können die Oberflächen der Elektroden 22, 24 mit tastbaren Markierungen 40 versehen werden. Besonders zweckmäßig ist es, beispielsweise in einer Reihe nebeneinanderliegender Elektrodenpaare 22, 24 bei jeder fünften oder zehnten Elektrode eine Zusatzmarkierung vorzusehen.

Die tastbaren Markierungen 40 verbessern die Erkennung der einzelnen Elektroden 22 und 24 sowie den Übergang von einem Elektrodenpaar zu dem benachbarten Elektrodenpaar, während die erwähnten Zusatzmarkierungen, die vorzugsweise auch außerhalb der eigentlichen Elektroden 22, 24 angeordnet sein können, die Groborientierung wesentlich erleichtern.

Fig. 6 zeigt ein Ausführungsbeispiel, bei welchem die Schaltelemente als Alternative zu den Elektrodenpaaren 22, 24 durch optoelektronische Reflektionselemente 52, 54 gebildet sind.

Die Darstellung der einzelnen Bildschirmzeilen und Bildschirmspalten eines Bildschirmes erfolgt dabei durch Öffnungen 46, die durch die Finger 36 einer Bedienungsperson abgedeckt werden können. Unterhalb der Öffnungen 46 befinden sich Fototransistoren 52 mit zugeordneten Leuchtdioden 54. Diese Leuchtdioden 54 werden einzeln nacheinander angesteuert, und durch einen zwischen benachbarten Positionsflächen 48, 50, die zwischen sich eine Öffnung 46 bilden, aufgelegten Finger 36 erfolgt eine diffuse Reflektion der Strahlung durch die Hautoberfläche 44.

Durch die reflektierte Strahlung wird im benachbarten Fototransistor 52 der Kollektorstrom und damit der Spannungsabfall an einem gemeinsamen Kollektorwiderstand 58 geändert. Beim Auftreten einer Spannungsänderung am Ausgang 56 wird die Position der dann gerade angesteuerten Leuchtdiode 54 festgestellt, woraus eine Bildschirmzeile bzw. eine Bildschirmspalte bestimmt werden kann.

Die Auswahleinrichtungen 12, 14 zur Auswahl und Bestimmung von Bildschirmzeilen und Bildschirmspalten lassen sich auch mit kapazitiven, induktiven, piezoelektrischen oder mit mechanischen Schaltelementen mit elektrischen Kontakten realisieren.

Nachdem in der beschriebenen Weise ein Koordinatenpunkt angewählt worden ist, wird in an sich bekannter Weise noch ein besonderes Auslösesignal erzeugt, um den Inhalt des angewählten Koordinatenpunktes beispielsweise durch eine Sprachausgabe wiederzugeben. Für die Erzeugung dieses Auslösesignals bietet sich in Anlehnung an den Grundgedanken der Erfindung in zweckmäßiger Weise an, unterhalb der waagerechten Auswahleinrichtung für die Spalten bzw. seitlich neben der Auswahleinrichtung für die Zeilen jeweils eine weitere Schaltleiste in Form einer gedruckten Schaltung mit jeweils einem Elektrodenpaar zu bilden.

Dies hat für den Benutzer den Vorteil, daß der Finger, welcher die betreffende Auswahleinrichtung 12 oder 14 betätigt hat, dann nur jeweils seitlich oder nach unten bewegt zu werden braucht, um das gewünschte Signal auszulösen. Dabei wirken die betreffenden, vom Finger überbrückten Elektrodenpaare als Schalter.

**Ansprüche**

1. Vorrichtung zur Kommunikation von Blinden oder Sehbehinderten mit datenverarbeitenden Geräten (EDV-Geräte) zur Auswahl eines einem Bildschirmzeichen entsprechenden Koordinantenpunktes auf einem Bildschirm des Gerätes, wobei die Auswahl des Koordinantenpunktes in zwei zueinander senkrechten x- und y- Richtungen mittels je einer zugeordneten, die Festlegung von senkrechten Spalten und waagerechten Zeilen zur Bestimmung des Koordinatenpunktes ermöglichenden Auswahleinrichtung erfolgt und ein dem Informationsgehalt des ausgewählten Koordinantenpunktes entsprechendes elektrisches Informationssignal erzeugt wird, dadurch gekennzeichnet, daß die Auswahleinrichtungen (12, 14) jeweils durch eine Vielzahl von ortsfesten Schaltelementen (22, 24) gebildet ist, und daß die Anzahl der Schaltelemente (22, 24) der Auswahleinrichtung (14) für die Spalten (18) bzw. der x-Richtung der Anzahl der Spalten (18) selbst und die Anzahl der Schaltelemente (22, 24) der Auswahleinrichtung (12) für die Zeilen (16) bzw. die y-Richtung der Anzahl der Zeilen (16) selbst entspricht.

2. Vorrichtung nach Anspruch 1, dadurch gekennzeichnet, daß die Schaltelemente durch Elektrodenpaare gebildet sind, die aus im Abstand voneinander angeordneten Elektroden (22, 24) in Form einer gedruckten Schaltung bestehen.

3. Vorrichtung nach Anspruch 1 und/oder 2, dadurch gekennzeichnet, daß die Schaltelemente bzw. die Oberflächen der Elektroden (22, 24) mit tastbaren Markierungen (40) versehen sind.

4. Vorrichtung nach einem oder mehreren der vorhergehenden Ansprüche 1 - 3, dadurch gekennzeichnet, daß jedem n-ten Schaltelement bzw. jedem n-ten Elek trodenpaar (22, 24) eine Zusatzmarkierung zugeordnet ist.

5. Vorrichtung nach Anspruch 1, dadurch gekennzeihnet, daß die Schaltelemente durch optoelektronische Reflektionselemente (52, 54) gebildet sind.

6. Vorrichtung nach Anspruch 1, dadurch gekennzeichnet, daß die Schaltelemente durch mechanische, kapazitive, induktive oder piezoelektrische Schalter gebildet sind.

12

Fig.1

10

14

12

Fig.2

A B C D E F — 60

a b c d e f

16

22

24

18

14

22

24

20

28

14

22

24

26

Fig.3

30

32

34

36

38

Fig.4

22    40    24

40      42    40

22            24

Fig.5

44    36

Fig.6

46  48    50    46

52    54  52  54  52  54

58    +U

56